(19) Europäisches Patentamt
European Patent Office
Office européen des brevets

(11) **EP 3 525 002 B1**

(12) **EUROPEAN PATENT SPECIFICATION**

(45) Date of publication and mention
of the grant of the patent:
**05.08.2026 Bulletin 2026/32**

(21) Application number: **18156277.8**

(22) Date of filing: **12.02.2018**

(51) International Patent Classification (IPC):
**G01S 13/89** (2006.01)    **G01S 13/72** (2006.01)
**G01S 13/04** (2006.01)

(52) Cooperative Patent Classification (CPC):
**G01S 13/42; G01S 13/52; G01S 13/72**

(54) **METHODS FOR THE DETERMINATION OF A BOUNDARY OF A SPACE OF INTEREST USING RADAR SENSORS**

VERFAHREN ZUR BESTIMMUNG EINER GRENZE EINES INTERESSIERENDEN RAUMES MIT RADARSENSOREN

PROCÉDÉS DE DÉTERMINATION D'UNE LIMITE D'UN ESPACE D'INTÉRÊT À L'AIDE DE CAPTEURS RADARS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.08.2019 Bulletin 2019/33**

(73) Proprietor: **IMEC VZW**
**3001 Leuven (BE)**

(72) Inventors:
• **PARASHAR, Karthick**
**3001 Leuven (BE)**
• **GIELEN, Thomas**
**3001 Leuven (BE)**
• **RYKUNOV, Maxim**
**3001 Leuven (BE)**
• **BOURDOUX, Andre**
**3001 Leuven (BE)**

(74) Representative: **Roth, Sebastian**
**Mitscherlich PartmbB**
**Karlstraße 7**
**80333 München (DE)**

(56) References cited:
DE-A1- 102015 107 388     US-A- 5 150 099
US-A1- 2012 314 081      US-A1- 2016 139 255
US-A1- 2016 375 932      US-B2- 7 592 944

**Description**

Field of the disclosure

The present disclosure relates to methods for the determination of a boundary of a space of interest using a radar sensor, and is more particularly, although not exclusively concerned, with the determination of a boundary of an enclosure, such as, a room.

Background of the disclosure

In the domain of home automation, there is a requirement to be able to sense the presence of an individual in a room or space within the home. Passive infrared (PIR) systems are well known for sensing the presence of individuals in a room can be incorporated into home automation systems. However, such systems tend to only detect movement in the room and no detection of position nor tracking is involved.

If a PIR system is replaced by a millimetre wavelength radar system, due to the penetrating nature of electromagnetic radiation at such wavelengths, it is often difficult to determine the perimeter of a room as some materials are transparent or translucent to the radiation. This results in electromagnetic radiation leaking beyond the boundary of the enclosure or room with the generation of erratic or unintended detections of the radar sensor. In addition, doorways, open doors and open windows can also lead to detections outside of the perimeter of the room.

WO-A-01/01168 describes a system and method for intrusion detection using a time domain radar array. Two or more radar sensors are located in a sparse array around a building which is to be monitored and are configured to communicate with one another and with a processor. The sensors are installed in a conventional electrical wall socket, and, if forward scattering data is to be used, the sensors need to be synchronised. The processor determines whether an alarm signal should be generated by subtracting a clutter map indicative of the normal situation from a current radar image to produce a differential clutter map. Calibration of the system may be performed by moving a transmitter along a calibration path around the area to be protected, and, each sensor tracks the movement of the transmitter. Calibration may also be performed manually using information about the area being monitored or using radar pulses emitted from each sensor.

US-B-7250853 discloses a surveillance system which combines target detection sensors with adjustable identification sensors to identify targets within a guard zone. The target detection sensors, for example, radar sensors, detect targets entering the guard zone and the adjustable identification sensors, for example, steerable cameras, which classify and identify the targets detected by the target detection sensors. A system controller controls the operation and coordination of the target detection sensor and the adjustable identification sensors in the surveillance system in accordance with predetermined threat levels.

However, each of the systems described above requires multiple radar systems to be able to monitor an area. This can be expensive for home automation. Moreover, these systems do not allow for the penetrating nature of radiation at radar frequencies and may trigger false alarms unless the target is confirmed by some other means.

Moreover, as the systems described above require at least two radar sensors and wireless links therebetween, a complex system is required to be able to derive the boundary of an enclosure. Furthermore, the method cannot readily adjust to changes in the field of view of the radar sensor without having to re-calibrate the system.

Summary of the disclosure

It is an object of the present disclosure to provide a method for the determination of a boundary of a space of interest by detecting and tracking targets moving in that space.

It is another object of the present disclosure to provide a method of determining a boundary of a space by identifying a line in a scan plane which is perpendicular to a normal of a view angle of a radar sensor and deriving the boundary based on the determination of the line and the distance of the line from the radar sensor.

It is a further object of the present disclosure to provide a method of determining a boundary of a space of interest where moving targets following a predetermined path are tracked to derive the boundary.

It is yet another object of the present disclosure to provide a method which can refine a boundary of a space of interest by tracking moving targets within a field of view of a radar sensor.

In accordance with one aspect of the present disclosure, there is provided a method of determining a boundary of a space of interest using a radar sensor, the method comprising the steps of:

> a) scanning in at least one plane within the field of view of the radar sensor;
> b) detecting one or more moving targets within the field of view;
> c) tracking the one or more detected moving targets;
> d) deriving information relating to the one or more tracked moving targets;
> e) determining, from the derived information, regions not traversed by the one or more tracked moving targets; and
> f) deriving a boundary of the space of interest from the derived regions.

In accordance with the present disclosure, the described method is less complex than those of the prior art, and, is relatively inexpensive to implement using off-the-shelf components. Moreover, no extra active mobile devices are required for setting up the radar sensor for operation.

In an embodiment, step d) further comprises deriving positional information relating to the one or more tracked moving targets. The positional information provides an indication of where the one or more tracked moving targets moves within the field of view of the radar sensor.

In an embodiment, step b) further comprises the steps of:

> b1) detecting one or more fixed targets present within the field of view of the radar sensor; and
> b2) determining positional information for the one or more fixed targets;
> and wherein step f) further comprises the step of:
> refining the boundary of the space of interest using the positional information relating to the one or more fixed targets.

By determining positional information relating to one or more fixed targets, these can be used to define better the boundary of a space of interest.

In an embodiment, step d) further comprises deriving velocity information relating to movement of the one or more tracked moving targets. The velocity information indicates whether or not a moving target is able to move within a particular region within the field of view of the radar sensor.

In an embodiment, step d) further comprises dividing the field of view into sub-space regions in accordance with range resolution, $\partial R$ and angle resolution in azimuth, $\partial \theta$. By dividing the field of view into sub-space regions, it is possible to map more accurately the movement of one of more moving targets within the azimuth plane of the field of view of the radar sensor.

In addition, step d) may further comprise dividing the field of view into sub-space regions in accordance with angle resolution in elevation, $\partial \varnothing$. This increases the resolution of the map as it can be extended to both the azimuth and elevation planes within the field of view of the radar sensor.

In an embodiment, step d) further comprises assigning a histogram to each sub-space region. By assigning a histogram to each sub-space region, information relating to the targets within the field of view can readily be identified.

In an embodiment, step d) further comprises mapping the positional information relating to the one or more tracked moving targets to sub-space regions, and, populating each histogram with velocity information relating to movement of the one or more tracked moving targets for a respective sub-space region.

In this way, each histogram contains information relating to movement of one or more tracked targets with respect to an associated sub-space region.

In an embodiment, step e) further comprises identifying one or more histograms for which the velocity information is zero, and, identifying sub-space regions associated with the identified one or more histograms as being regions not traversed by the one or more tracked moving targets.

The identification of histograms which effectively have no data relating to movement of one or tracked moving targets indicates, by way of associated sub-space regions, regions which comprise obstacles or other "no-go" regions.

In accordance with the present disclosure, the method may further comprise the steps of:

> g) updating each histogram in accordance with velocity information relating to movement of the one or more tracked targets; and
> h) refining the boundary of the space of interest using the updated histograms.

By updating the histograms and using that information to refine the boundary of the space of interest, it is possible to update the positions of obstacles, fixed targets and "no-go" regions without having to re-calibrate the radar sensor.

In accordance with another aspect of the present disclosure, there is provided a method of determining a boundary of a space of interest using a radar sensor, the method comprising the steps of:

> i) performing a plurality of scans of the space of interest in at least one of: the azimuth plane and the elevation plane within the field of view of the radar sensor;
> ii) determining a range-angle map after each scan;
> iii) identifying at least three points forming a line in the scan plane, the line being perpendicular to a normal of a view angle of the radar sensor;
> iv) determining the location of one part of the boundary of the space of interest from the identified points forming the line in the scan plane; and
> v) deriving an extent of the boundary in the scan plane.

This method provides a simple way of deriving the boundary of a space of interest without having to track any moving targets. Simple processing of the range-angle map after each scan determines one boundary of the space of interest and infers other boundaries therefrom.

In an embodiment, the space of interest may be pre-defined, and step iv) comprises locating a first dimension of the pre-defined space of interest, and step v) comprises locating a second dimension of the pre-defined space of interest. In an embodiment, the pre-defined space of interest comprises a rectangle.

In the case of the determination of a boundary of a room, knowing that the room is rectangular, it is possible to determine the position of a wall opposite to the radar by identifying three points forming a line on that wall from the radar scans. The extent of the wall, width or height depending on whether the scan is a scan in azimuth or elevation, provides another dimension of the rectangular room.

In accordance with a further aspect of the present disclosure, there is provided a method of determining a boundary of a space of interest using a radar sensor, the method comprising the steps of:

I) scanning in at least one plane within a field of view of the radar sensor;

II) detecting one or more moving targets within the field of view;

III) tracking one or more detected moving targets following a path within the field of view; and

IV) deriving the boundary of the space of interest from the path of the one or more tracked moving targets.

Using this method, a boundary of a space of interest can be derived using movement of one or more tracked targets following a chosen path determined to provide information for the radar sensor.

In an embodiment step III) comprises tracking the one or more moving target in one of: a random path, a planned path and a perimeter path within the space of interest.

Whilst a perimeter path and a planned path can readily provide information in an empty space of interest, the random path may be used to navigate around obstacles within the space of interest, for example, furniture. The use of such paths provides a calibration of space of interest for the radar sensor which may be refined by tracking one or more moving targets as indicated above.

Where the path comprises one of: the random path and the planned path, step IV) comprises using a morphological processing operation on the path of the one or more tracked moving targets.

Morphological processing, such as, dilation, effectively increases the accuracy of the determination of the boundary of the space of interest, and, can be refined by tracking one or more moving targets and indicated above.

Where the path comprises the perimeter path, step IV) comprises determining the position of the one or more moving targets at any time on the perimeter path.

Brief description of the drawings

For a better understanding of the present disclosure, reference will now be made, by way of example, to the accompanying drawings in which:-

Figure 1 shows a vertical section through a room and illustrates possible mounting points for a radar sensor in the room;

Figure 2 shows an opposite wall to where the radar sensor is mounted and illustrates points detected by the radar sensor;

Figure 3 shows a perspective view of part of a room in which a radar sensor is mounted and illustrates scanning of an opposite wall in both azimuth and elevation;

Figure 4 illustrates lines corresponding to points detected in both azimuth and elevation as shown in Figure 2;

Figure 5 is a flow chart illustrating steps for identifying an opposite wall to that on which a radar sensor is mounted in accordance with a method of the present disclosure;

Figure 6 illustrates estimating the distance of the opposite wall and its extent;

Figures 7a and 7b illustrate radar sensor coverage for a rectangular room and an L-shaped room respectively;

Figures 8a to 8c illustrate mapping paths for semiautomatic radar calibration where Figure 8a illustrates a random path, Figure 8b illustrates a planned path and Figure 8c illustrates a perimeter path in accordance with a method of the present disclosure;

Figures 9a to 9c illustrate area estimation for respective ones of the paths shown in Figures 8a to 8c;

Figures 10a and 10b illustrate a rectangular room determined using different types of mapping in accordance with a method of the present disclosure;

Figures 11a and 11b illustrate an L-shaped room determined using different types of mapping in accordance with a method of the present disclosure;

Figure 12 is a flow chart illustrating steps for determining a space model in accordance with a method of the present disclosure; and

Figure 13 is a flow chart illustrating the interaction of the methods of the present disclosure to provide an accurate space model.

Description of the disclosure

The present disclosure will be described with respect to particular embodiments and with reference to certain drawings but the disclosure is not limited thereto. The drawings described are only schematic and are nonlimiting. In the drawings, the size of some of the elements may be exaggerated and not drawn on scale for illustrative purposes.

In accordance with the present disclosure, there are several of options for mounting a radar sensor to determine or define a boundary of space of interest or an enclosure.

The term "space" as used herein refers to a volume or area having no physical boundaries which can be used to define the volume or area. This can include an open space which is only delimited by barriers, cordons, ropes or the like forming "no-go" regions.

The term "space of interest" as used herein refers to a space which is to be defined and monitored by a radar sensor in accordance with the present disclosure.

The term "space model" as used herein refers to a model of the space of interest derived in accordance with methods of the present disclosure. The space model may be two-dimensional or three-dimensional depending on whether scans are performed in both azimuth and elevation.

The term "enclosure" as used herein refers to a volume or area having physical boundaries which define the volume or area. This can include a room or any other area or volume which has walls or other physical delimiters.

The term "room" as used herein refers to a specific type of enclosure which is generally rectangular and has walls. This may also include a room of non-rectangular shape, such as, an L-shape or curved shape.

The term "RCS" as used herein refers to radar cross-section and is a measure of the ability of a target to reflect radar signals in the direction of a radar receiver or the detectability of the target. In effect, this is a measure of the ratio of backscatter power per steradian (unit solid angle) in the direction of the radar (from the target) to the power density that is intercepted by the target. Typically, RCS is calculated in three dimensions and can be expressed as:

$$\sigma = \lim_{r \to \infty} 4\pi r^2 \frac{S_s}{S_i}$$

where $\sigma$ is the RCS, $S_i$ is the incident power density measured at the target, and $S_s$ is the scattered power density seen at a distance r away from the target.

The terms "MIMO radar system", "MIMO radar sensor" and "MIMO" as used herein refer to a radar system comprising a plurality of transmit-receive antennas, each transmitter antenna being configured for transmitting a signal and each receiver antenna being configured for receiving the transmitted signal reflected from at least one target.

The terms "monostatic radar system", "monostatic radar sensor" and "monostatic radar" as used herein refer to a radar sensor which comprises a transmitter configured for transmitting a signal and a receiver configured for receiving a signal corresponding to the transmitted signal when reflected from a target. The transmitter and the receiver are collocated. Typically, a transmitter and a receiver are referred to as being collocated when the distance between the transmitter antenna and the receiver antenna is comparable to the wavelength of the transmitted signal. A monostatic radar may have one transmitter and multiple receivers, for example, eight receivers (termed "1x8" monostatic radar).

The terms "bi-static radar system", "bi-static radar sensor" and "bi-static radar" as used herein refer to a radar system which comprises a transmitter configured for transmitting a signal and a receiver configured for receiving a signal corresponding to the transmitted signal when reflected from a target. The transmitter and the receiver are separated by a distance which is comparable to the expected distance between the bi-static radar system and the target.

The terms "multi-static radar system", "multi-static radar sensor" and "multi-static radar" as used herein refer to a radar system including multiple monostatic or bi-static radar subsystems with a shared area of coverage. As such, a multi-static radar system may comprise multiple transmitters with one receiver, i.e. a multiple input single output (MISO) radar system. Further, a multi-static radar system may comprise multiple receivers with one transmitter, i.e. a single input multiple output (SIMO) radar system. Furthermore, a multi-static radar system may comprise a MIMO radar system.

The term "radar sensor" as used herein refers to a radar configured for generating a radar beam, for transmitting the radar beam using a transmit module, for scanning the radar beam in at least one of azimuth or elevation planes (preferably both azimuth and elevation), and for receiving the reflected beam at a plurality of receive modules. In addition, the radar includes a processor/controller and a memory. Beam steering may also be used. Each radar sensor is configured to operate totally independently from any other radar sensor and effectively forms an independent unit.

The term "wall detection" as used herein refers to a method for detecting a wall which detects a straight line or a plane and wherein the normal of the detected line or plane and the normal of the view angle of the radar sensor are share or aligned. In other words, the detected line or the detected plane is perpendicular to the normal of the view angle of the radar. In particular, the straight line or plane may be defined by at least three points on the wall being detected.

The term "supervised boundary estimation" as user herein refers to a method in which a moving target, such as, a person, is used to determine the boundary of a space of interest by moving within the space of interest.

The term "heat mapping" as used herein refers to a method of determining a space of interest using a radar sensor or system due to the movement of a target within that space. There is no monitoring of heat or infrared radiation, only the detection and tracking of a target as it moves within the space of interest. Heat mapping is a form of supervised boundary estimation.

The term "unsupervised boundary estimation" as used herein refers to a method of tracking the movement of targets, for example, people, in and around the space of interest. In some implementations of unsupervised boundary estimation, the target being detected and tracked may be other than people, for example, grain in a silo to which a radar sensor is fitted.

The term "intent mapping" as used herein refers to a method of providing boundary information for a space of interest by tracking the movement of targets, for example, people, within or around a space of interest. Intent mapping is a form of unsupervised boundary estimation.

The term "intent of motion" as used herein refers to whether it is possible for a target to move to a given location in space adjacent to the space currently occupied by the target.

The term "convex polygon" as used herein refers to a simple polygon where none of the sides thereof are self-intersecting, and, in which no line segment between two points on the boundary of the polygon extends outside the polygon. In other words, a convex polygon is a simple polygon whose interior forms a convex set. A rectangular room is an example of a "convex-shaped enclosure". The term "concave polygon" as used herein refers to a polygon which is not convex. A simple polygon is concave if, at least one of its internal angles is greater than 180°. An example of a concave polygon is a star polygon where line segments between two points on the boundary extend outside of the polygon. An example of a "concave-shaped enclosure" is an L-shaped room.

In accordance with the present disclosure, a radar sensor is installed to monitor a space of interest, such as, an enclosure having walls or a space delimited by barriers, for example, cordons or ropes. The radar sensor needs to be calibrated to determine the extent of the space of interest, that is, the positions of "no-go" regions, for example, walls or other barriers which define the space of interest. The determination of the extent of the space of interest can be performed using methods described below. Once calibrated, tracking of detected moving targets within the space of interest can be used to refine further the extent of the space of interest.

One method for determining the boundary of a space of interest in accordance with the present disclosure is wall detection where the boundary of an enclosure or room is derived using trigonometry from a straight line or a plane perpendicular to the normal of the view angle of the radar sensor.

Another method for determining the boundary of a space of interest in accordance with the present disclosure is heat mapping where tracking of a moving target within the space of interest after installation of the radar sensor is used to derive the boundary.

A further method for determining the boundary of a space of interest in accordance with the present disclosure is intent mapping where tracking of moving targets both inside and outside of the space of interest provides information on "no-go" regions from which the boundary can be derived.

In accordance with one method of the present disclosure, a two-step process is used to map a space of interest which has delimiters, such as walls. The first step of the process involves estimating the distance of the wall or the corners formed by walls situated in front of the installed radar. This step is performed once at the time of installation of the radar sensor. In the second step of the process, continuous refinement is performed which involves tracking detected targets to fine tune the extent of the space of interest having delimiters, for example, a room. The second step can be referred to as "intent mapping" and is described in more detail below.

As an alternative to the wall estimation part of the two-step process, heat mapping may be used as described in more detail below.

Intent mapping may be used as a separate method as described in more detail below.

Different embodiments and combinations of embodiments of the present disclosure are described below with respect to a room which has physical barriers (walls). However, the principles of the disclosure can be applied to other situations, such as, spaces or enclosures without physical delimiters or barriers.

The methods of the present disclosure require a radar sensor with beamforming capabilities. The radar sensor may have a single transmitter element with multiple, e.g. eight, receiver elements. The range resolution of the radar sensor must be sufficient in order to distinguish the positions of the walls, as well as targets or objects in front of the wall and behind the wall (outside of the room). For a given angular resolution of the radar sensor, there is a limit on the minimum size of the room below which the angle of detections may become cluttered. The largest dimension of an enclosure is limited by the link budget of the radar sensor, that is, the gains and losses from the radar transmitter through space to the receiver in the radar receiver.

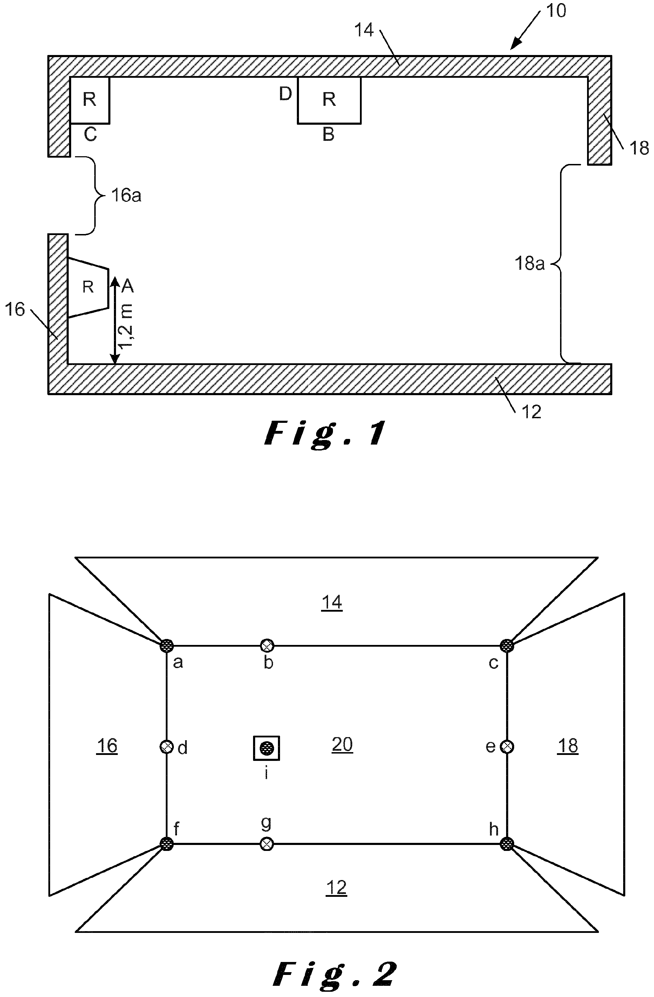

Figure 1 shows the vertical cross section of a room 10 having a floor 12, a ceiling 14 and walls 16, 18 which extend from the ceiling 14 to the floor 12. Wall 16 has a window opening 16a and wall 18 has a door opening 18a. Three possible radar mount points A, B and C are indicated.

Position A is on wall 16 situated about 1.2m from the floor 12 (and coincides with one of the heights at which electrical sockets may typically be installed in some countries). In this position, the wall and corners opposite to the radar sensor are within its field of view. There are up to 8 corners including those formed by two adjacent walls and those formed by walls with the ceiling and floor. In Figure 1, walls adjacent to walls 16 and 18 are not shown. However, it will readily be appreciated that these walls form corners at their junctions with the ceiling 14 and walls 16, 18 and with the floor 12 and walls 16, 18, that is, there are 4 corners for each wall with 4 edges running around the periphery of each wall.

As shown in Figure 2, a point on wall 20 directly opposite to a radar sensor located at Position A is visible as indicated at $i$. A total of 9 prominent detections can be made by the radar sensor relating to the opposite wall, that is, corners $a, c, f$ and $h$, edge $g$ with the floor 12, edge $b$ with the ceiling 14 and edges $d, e$ with respective ones of walls 16, 18, and, point $i$ on wall 20.

From Position B, a top view of the room 10 is obtained. Like Position A, all 9 points including the point opposite to the radar position and the corners formed by the floor with 4 walls of the room are visible to the radar sensor.

Position C is similar to Position A but the radar is located at a higher position. From this position, the radar sensor is most likely able to view the corners on the top portion of the wall, that is, corners *a, c* and edge *b*.

Similarly, the radar sensor installed in position B could be oriented to monitor the walls instead of the top view looking at the floor. This orientation is to be considered as Position D.

From the perspective of Position D, with special antenna design, the radar sensor could potentially obtain a 360° view the enclosure or room. It is be noted that there could be situations when some of these corners are occluded by objects with poor RCS.

In the positions described with reference to Figure 1, it will be noted that the radar sensor must have a clear line of sight in order to be able to detect the wall and corners. In particular, it is preferred that the radar sensor is not mounted in a corner, but if it cannot be mounted in any other suitable location, it is preferred that the perpendicular to the normal of the view angle of the radar sensor is arranged not to extend directly into the corner but is oblique thereto.

In one method where an enclosure or room is to be mapped and monitored, it is important that the farthest perimeter of the enclosure is visible to the radar sensor and is situated perpendicular to the normal of the view angle thereof.

In accordance with one method of the present disclosure, wall detection is performed in two steps, namely, scanning the enclosure or room for artefacts and then inferring which of these artefacts define the perimeter. Artefacts, such as fixed target, which can be detected by the radar sensor may be present at and around the perimeter of the space of interest.

A wall is detected by collocating detections made by the radar sensor on an opposite wall. In order to observe corners, the radar sensor scans in both azimuth and elevation planes for detection of corners. However, it is not essential to scan in both planes, and, scanning in only one plane is also sufficient. A range-angle map is obtained after each scan. The beam-width of the antenna radiation pattern is inversely proportional to its aperture. In the case of MIMO radar sensors having many antenna elements, a sharp directional beam, also popularly referred to as pencil-beam, can be generated. If the antenna array is suitably placed, the sharp beam can be steered in both the azimuth and elevation planes.

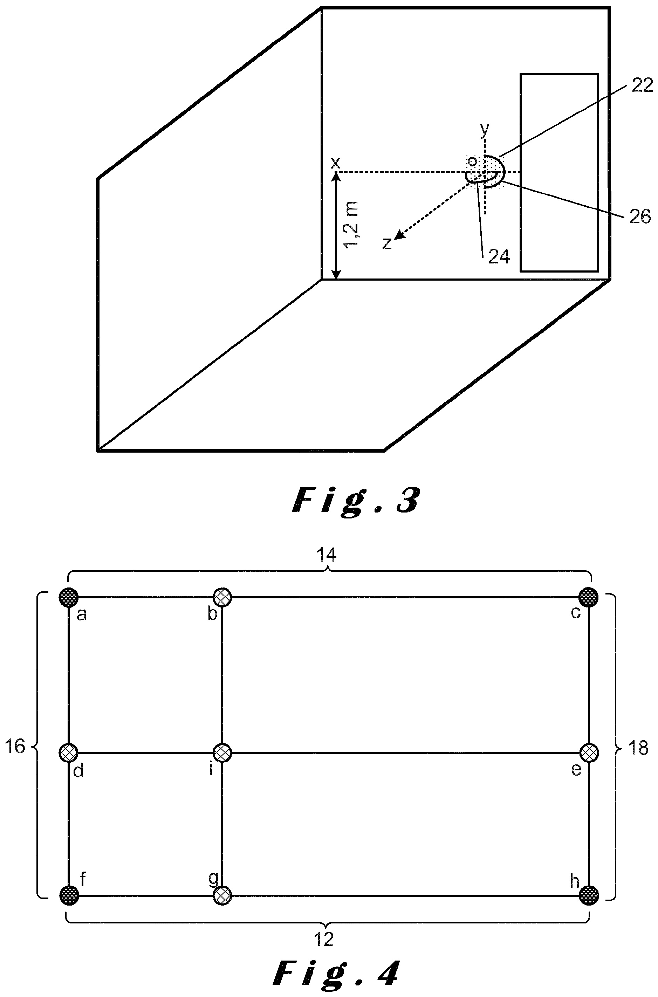

For example, when a radar 22 installed in a rectangular room at "o" (equivalent to Position A as shown in Figure 1) as shown in Figure 3. The normal of the view angle of the radar sensor is along the line $\overline{oz}$. The azimuth plane is the plane formed by lines $\overline{xo}$ and $\overline{zo}$ and elevation plane is formed by lines $\overline{yo}$ and $\overline{zo}$. Azimuth angles are spanned by curve 24 and elevation angles are spanned by curve 26. When no part of the wall is occluded by other objects, it is possible to detect points lying on the

lines $\overline{adf}$, $\overline{big}$ and $\overline{ceh}$ with the range-angle maps of azimuth scan and points corresponding to lines $\overline{abc}$, $\overline{die}$ and $\overline{fgh}$ with the range-angle maps of elevation scan. These are shown in Figure 4 where lines corresponds to points detected along azimuth and elevation with vertical lines indicating azimuth scans and horizontal lines indicating elevation scans. In effect, the points correspond to the points shown in Figure 2 with points *a, c, f* and *h* correspond to corners *a, c, f* and *h*, point *g* with edge *g* on the floor 12, point b with edge b at the ceiling 14 and points *d, e* with edges *d, e* on respective ones of walls 16, 18, and, point *i* with point *i* on wall 20. The floor 12, ceiling 14 and walls 16, 18 are indicated by respective brackets.

Although nine points connected by respective lines are shown in Figure 4, in this method, it is only necessary to identify three of these points in a straight line to derive the position of the farthest wall, for example, points on lines $\overline{abc}$, $\overline{die}$ and $\overline{fgh}$ in the elevation plane and points on lines $\overline{adf}$, $\overline{big}$ and $\overline{ceh}$ in the azimuth plane.

In an empty enclosure with ideal conditions, all nine points as shown in Figure 4 are detected. However, in practice, there can be other detections from objects contained within the enclosure. It is assumed that artefacts on the ground or floor of the enclosure are distributed randomly and are seldom in one straight line and almost never on a single plane. Therefore, in order to identify the real perimeter, a least-square fit is performed with all detected points in both elevation and azimuth planes. The least-square fit can also be performed with the points detected only from azimuth or elevation scans. A straight line or a plane perpendicular to the normal of the radar is determined at different distances from the radar to find the best fit. The distance at which the best fit is found is determined to be location of a detected wall.

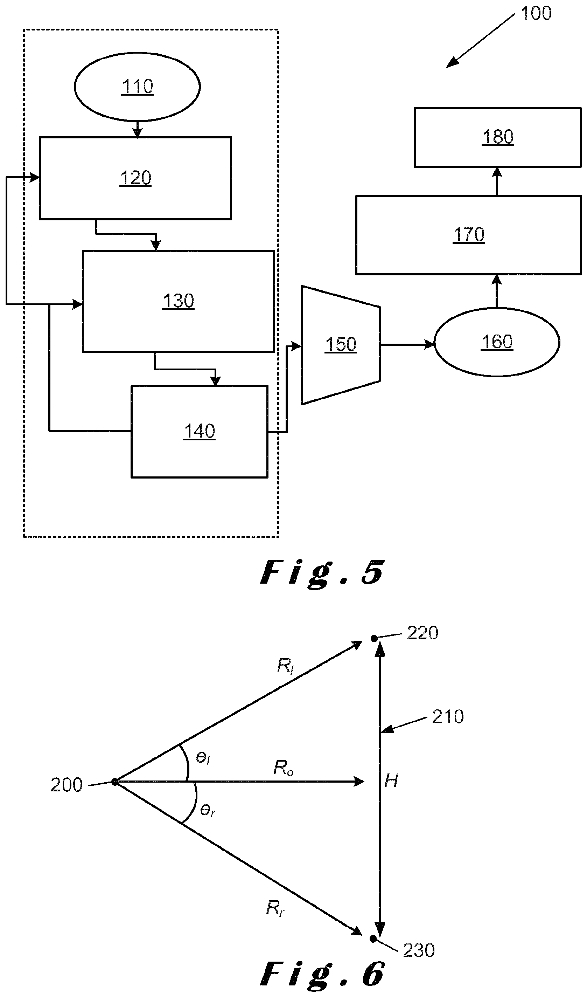

Figure 5 illustrates a flow chart 100 for the steps for determining the detected wall. At step 110, after scanning, radar detections are obtained. At step 120, the radar detections are associated with each scanned direction *s* in azimuth and elevation as well as for each angular position *a* along the chosen scan direction s. At step 130, a subset of detections for a chosen scan plane s and angular position *a* is selected. At step 140, for the selected subset of detections, a line $L_i(s_i, a_i)$, in the direction perpendicular to the normal view of the radar, is fit. Each line $L_i(s_i, a_i)$ is stored in a record in the memory of the radar sensor at step 150. After this is repeated for both azimuth and elevation planes and for all angles in respective planes, as indicated by the lines returning to steps 120 and 130, a set of lines $L(s, a)$ is obtained (at step 160). At step 170, a plane comprising the maximum number of such lines is determined, and, at step 180, the detected wall is determined as being the wall opposite to the radar sensor.

Once the opposite wall is identified, it is assumed that the enclosure is a pre-defined shape, for example, rectangular, L-shaped, etc. so that the detected points can be mapped. A user may select or define the shape of the model to assist with the mapping of the detected points. From the detected points located on the identified wall, the extent of the wall (length from corner-corner) and an estimate of the room dimension is deduced by simple trigonometric identities as shown in Figure 6.

In Figure 6, the radar sensor is indicated at 200 and the opposite wall at 210 with the extent of the wall $H$ in the azimuth plane being between points 220 and 230 with line $R_o$ corresponding to the distance between the radar 200 and the opposite wall 210 and coinciding with the normal of the view angle of the radar sensor. Lines $R_l$ and $R_r$ extend on either side of line $R_o$ to point 220 and point 230 of the wall 210 respectively.

The extent of the wall $H$ is obtained by using simple trigonometric identities and are described as:

$$H = R_l \sin(\theta_l) + R_r \sin(\theta_r)$$

Here, $H$ is the enclosure extent which can be either the width or height depending upon the scanning planes. $R_r$, $\theta_r$ and $R_l$, $\theta_l$ are observed as being points on the wall 210 which are farthest from the radar sensor 200. $R_o$ is computed and corroborated as $R_0 = R_l \cos(\theta_l)$ and $R_0 = R_r \cos(\theta_r)$. Further, $R_o$ is also an observed point on the opposite wall at zero degrees in both azimuth and elevation planes.

It is to be noted that $R_o$ gives the length of the enclosure or room and $H$ gives the width (assuming a rectangular enclosure or room).

It will be understood that Figure 6 illustrates the wall in one plane only, for example, in the azimuth plane, and that there are corresponding trigonometric identities in the elevation plane.

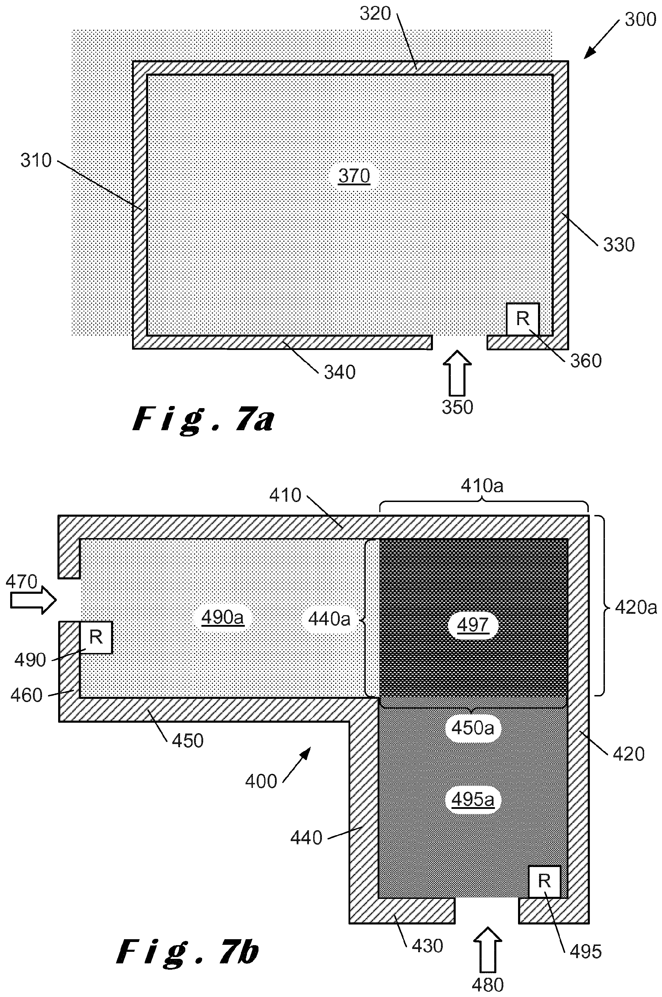

Different room shapes will need to be considered when determining the position of the opposite wall. In Figure 7a, a plan view of a rectangular room 300 is shown which has four walls 310, 320, 330, 340 and a door 350. A radar sensor 360 is positioned on wall 340 near to the door and can detect objects in the entire room as well as outside the room as shown by the shaded region 370. Such a radar sensor 360 captures the corners in the wall opposite to the radar installation. The determination of the opposite wall is performed as discussed with reference to Figure 5 above.

In Figure 7b, a plan view of an L-shaped room 400 is shown which has 6 walls 410, 420, 430, 440, 450, 460 and two doors 470, 480. A single radar sensor cannot easily cover both parts of the L-shape and two independent radar sensors 490, 495 are provided in respective arms of the L-shape as shown. Radar sensor 490 covers the space defined by walls 410, 450, 460 as indicated by regions 490a and 497, and, radar sensor 495 covers the space defined by walls 420, 430 and 440 as indicated by regions 495a and 497. As shown, due to the positioning of the radar sensors 490, 495, there is a region of overlap 497 as defined by extensions 440a and 450a of walls 440 and 450 and parts 410a and 420a of walls 410 and 420.

Each radar sensor 490, 495 captures the corners in the wall opposite the related radar installation, and determines that it views a rectangular space. It will readily be understood that the placement of the radar sensor needs to be carefully considered in rooms where the walls are irregular, that is, non-rectangular, and where more than one radar is required to cover the enclosure defined by the walls. For each radar sensor, the determination of the opposite wall is performed as discussed with reference to Figures 5 and 6 above.

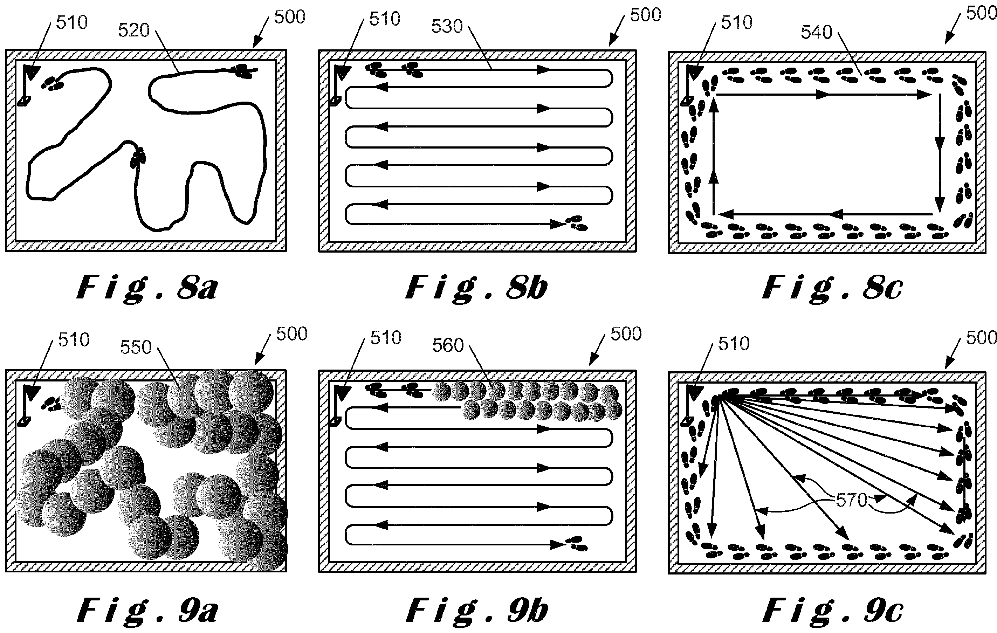

In another method, the perimeter of the space or enclosure can be determined by detecting movement of targets within the field of view of the radar sensor using heat mapping as described with reference to Figures 8a to 8c and 9a to 9c.

The heat mapping process comprises two parts. After the radar sensor has been installed in the enclosure, in a supervised setup, a moving target is guided within the enclosure in order to validate all spatial points within the enclosure. Here, the target is tracked by the radar sensor and the tracking history is used to infer the spatial coordinates belonging to the enclosure.

Whilst it is preferred that a single moving target is used for heat mapping, it will readily be appreciated that more than one moving target may be used.

The heat mapping for calibrating the radar sensor is initiated by a command to begin calibration or is initiated automatically once the radar sensor is powered on. During this phase, a designated target moves in a predetermined pattern to cover the area and perimeter of the enclosure, and, the target path can begin at any point within the enclosure. Preferably, the target path begins from a point in the enclosure that is very close to the radar. The radar sensor detects and tracks the movement of the designated target in order to map the room. Three path patterns are proposed for this purpose as shown in Figures 8a to 8c.

In Figure 8a, for a rectangular room 500 in which a radar 510 has been installed, random movement of a target as indicated by line 520 within the room 500 provides an indication of the extent of the room 500. Such a random movement may be used when there are stationary or fixed targets within the room, for example, furniture etc. Preferably, the random movement of the target starts at a point in the enclosure that is very close to the radar sensor and ends at the same point or another point very close to the radar sensor.

From the tracked locations as shown in Figure 8a, using a mathematical morphology based processing operation, such as, dilation, on the tracks with a wide mask to cover the area to be estimated. This is shown in Figure 9a.

In Figure 8b, for the rectangular room 500 with the installed radar 510, planned movement of the target as indicated by line 530 within the room provides an indication of the extent of the room 500. Such a planned movement may be used when the room is empty with no stationary or fixed targets within the room or where the space or enclosure is large.

For the tracked locations as shown in Figure 8b, the mathematical morphology based processing operation as described above with respect to Figure 8a may also be used. This is shown in Figure 9b where only part of the path 550 is shown as being dilated.

In Figure 8c, for the rectangular room 500 with the installed radar 510, planned movement of the target around the perimeter of the room as indicated by line 540 provides an indication of the extent of the room 500. Such a planned movement may be used when the room is empty with no stationary or fixed targets within the room.

For convex-shaped enclosures, walking along the perimeter is sufficient to infer all spatial coordinates within the enclosure as shown in Figure 8c. In Figure 9c, the determination of the position of the target at any time on the path around the perimeter of the enclosure or room, as indicated by arrows 570, enable the determination of the perimeter without having to apply morphology based processing operations.

If the enclosure in which the radar is installed is opaque to the radiation frequency of the radar, the heat mapping method provides an estimation of all possible spatial points within the enclosure, and it is sufficient for detecting targets within the enclosure. However, radiation at radar frequencies can penetrate or "see" through several materials (including building materials such as wood, plastic) making enclosures partially transparent. This affects the calibration process as targets outside of the enclosure or space of interest may also be detected during calibration of the radar affecting the estimate of spatial coverage.

In the second step of this process, the radar sensor continuously tracks movements of several moving targets and determines a distribution which increases the confidence relating to the position of the perimeter over time. This second step also allows for adaptations in the perimeter, for example, due to the movement of generally immovable targets within the enclosure, such as, relocation of furniture etc. as well as to alleviate the difficulties in perimeter detection when the enclosure comprises "see-through" materials as described above.

In this second step, the actual spatial position of the target together with the intent of motion of the target along any path, that is, the random path (Figures 8a and 9a), the planned path (Figures 8b and 9b) or the perimeter path (Figures 8c and 9c) within the determined perimeter is recorded. Intent of motion indicates whether it is possible to move to a given location in space adjacent to the space occupied by the moving target.

Intent information can also be obtained by tracking one or more moving targets, for example, people, and recording the instantaneous velocity of the targets being tracked over a long period of time. While each target moves, it is tracked and vectors of the spatial locations with respect to the target is recorded. The instantaneous velocity vector of the targets suggest intent and by observing many tracks for a long period, the perimeter of the room can be determined with a sufficiently high confidence.

In accordance with the present disclosure, an automatic or unsupervised boundary estimation method may be used to build on top of a supervised boundary estimation method. In the supervised boundary estimation method, the radar sensor continues to track a moving target following a random path, a planned path or a perimeter path, as described above with reference to Figures 8a to 8c and 9a to 9c, until the enclosure boundary our boundary of a space of interest is determined. In the unsupervised boundary estimation method, along with the spatial vectors, the velocity vectors of the tracked target are also recorded. The field of view of the radar sensor is preferably divided into sub-space regions, and, each sub-space region is associated with a histogram into which information relating to that sub-space region is stored. The velocity vector provides a measure of intent of motion or intent mapping, and, is stored in the histogram of the associated spatial position or sub-space region. If the unsupervised boundary estimation is used on top of the supervised boundary estimation or the wall detection method, the information derived by the these methods is populated into the histograms.

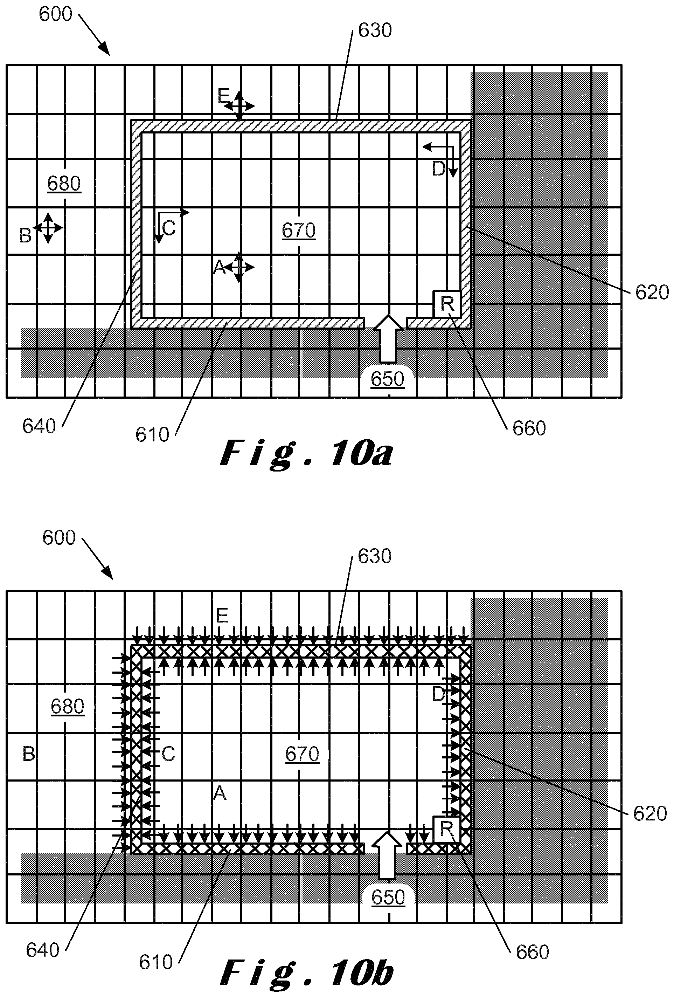

In accordance with a method of the present disclosure, intent mapping for one or more targets moving in a rectangular room are described with reference to Figures 10a and 10b. A room 600 is defined by walls 610, 620, 630, 640 and having a door 650 is shown. A radar sensor 660 is located in the room 600 and has a field of view which encompasses both the interior 670 of the room and an area 680 outside the room 600 due to the penetration of the radiation through the walls 630, 640. Due to the positioning of the radar sensor 660, walls 610 and 620 are already considered to be "no-go" areas.

In Figure 10a, the radar sensor 660 detects targets at locations A, B, C, D and E where targets at locations A, C and D are within the interior 670 of the room 600, and, targets at locations B and E in the area 680. As shown, targets at locations A and B can move in any one of two directions as indicated by the arrows; target at location C is limited by the wall 640 and can only move along the wall in either direction and away from the wall as indicated by the arrows; target at location D is in the corner of the room and is limited by walls 620 and 630 and can only move along either one of the walls, as indicated by the arrows along the walls, and away from the walls; and target at location E is outside the room 600 adjacent wall 630 and is limited thereby so that the target in location E can move along wall 630 in either direction and away from the wall as indicated by the arrows.

In Figure 10b, the room 600 is shown with the targets at locations A, C and D inside the room and with targets at locations B and E outside the room. Due to the mapping of the movement of these targets (and other targets, not shown), it is possible to define the walls of the room 600. This is because none of the targets move through the walls 630, 640 and therefore these walls can be considered to be barriers or "no-go" regions. As shown by the arrows pointing outwards from the interior 670 of the room and inwards from the area 680, the radar sensor 660 determines the boundary of the room 600 to be defined by the presence of wall 610 (as originally determined due to the positioning of the radar sensor), walls 620, 630 (as further defined by intent mapping), and wall 640 (as originally determined due to the positioning of the radar sensor). In this Figure, the arrows show all "no-go" directions for each sub-space or location.

It is to be noted that two orthogonal directions are shown in the Figures 10a and 10b for ease of explanation and that there may be more directions in which the target can move and be tracked. However, these directions, as indicated by the arrows, define histogram bins for collecting the data relating to the movement of the tracked moving targets.

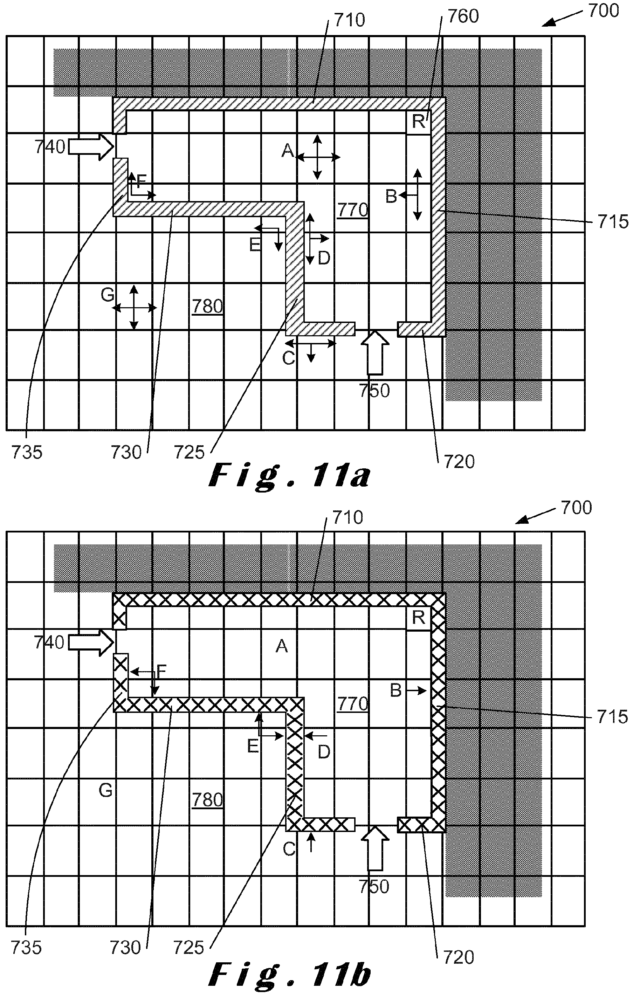

Figures 11a and 11b illustrate intent mapping for an L-shaped room 700. The room 700 has walls 710, 715, 720, 725, 730, 735 with doors 740, 750 in wall 735 and wall 720 respectively. A radar sensor 760 is located in a corner of the room 700 and has a field of view which encompasses interior 770 of the room and an area 780 outside the room due to the penetration of the radiation through the walls 720, 725, 730, 735. Due to the positioning of the radar sensor 760, walls 710 and 715 are already considered to be "no-go" regions.

In Figure 11a, the radar sensor 760 detects targets at locations A, B, C, D, E, F and G where targets at locations A, B, D and F are within the interior 770 of the room 700, and, targets at locations C, E and G in the area 780. As shown, targets at locations A and G can move in any one of two directions as indicated by the arrows; target at location B is limited by the wall 715 and can only move along the wall in either direction and away from the wall as indicated by the arrows; target at location C is outside wall 720 and can only move along wall 720 and away from the wall as indicated by the arrows; target at location D is limited by wall 725 and can only move along the wall in either direction and away from the wall as indicated by the arrows; target at location E is in a corner between walls 725 and 730 and is limited thereby, and, can only move in the directions along either one of the walls 725 and 730 as indicated by the arrows and away of the walls; and target at location F is in a corner between walls 730 and 735 and is limited thereby, and, can only move in directions along either one of the walls 730 and 735 as indicated by the arrows and away from the walls. The directions, as indicated by the arrows, define histogram data relating to the movement of the tracked targets at positions A, B, C, D, E, F and G.

In Figure 11b, the room 700 is shown with the targets at locations A, B, D and F inside the room and targets at locations C, E and G outside the room. Due to the mapping of the movement of these targets (and other targets, not shown), it is possible to define the walls of the room. This is because none of the targets move through the walls 720, 725, 730, 735 and therefore these walls can be considered to be barriers or "no-go" regions. In this Figure, the arrows shows the "no-go" regions/directions corresponding to locations A, B, C, D, E, F and G. As shown, movement of target at location B refines the position of wall 715; movement of target at C refines the position of wall 720; movement of targets at D and E refine the position of wall 725; movement of targets at E and F refine the position of wall 730. The radar sensor 760 determines the boundary of the room 700 to be defined by the presence of walls 710, 715 (as originally determined due to the positioning of the radar sensor and refined by the intent mapping), and walls 720, 725, 730, 735 (as further defined by intent mapping). The directions, as indicated by the arrows, define histogram data relating to the movement of the tracked targets at positions A, B, C, D, E, F and G.

It is to be noted that two orthogonal directions are shown in the Figures 11a and 11b for ease of explanation and that there may be more directions in which the target can move and be tracked.

In Figures 10a, 10b, 11a and 11b, the radar sensor maps the space within its field of view as a series of cells in a grid. The cells correspond to voxels of the radar data cube comprising a range axis and angles in the azimuth and elevation planes. The data cube can be represented by $(r, \theta, \emptyset)$ where r is the range value along the range axis and $\theta$ and $\emptyset$ are the angles in the azimuth and elevation planes respectively. If the scan is only performed in one plane, for example, the azimuth plane, then the cells correspond to pixels comprising a range axis and angles in the azimuth plane $(r, \theta)$.

It is to be noted that the position of one or more arrows associated with a particular location does not define the entire wall, and, there needs to be many instances when one or more targets occupy these cells along the wall and do not pass through the wall. Over a long period of time, the histogram is populated to make the inference of a barrier and hence a "no-go" region.

In contrast to Figures 10a and 11a, in Figures 10b and 11b, if a cell in which a target is being tracked has neighbouring cells marked with an arrow, it is likely that the arrow indicates a barrier or obstacle, and, if such a barrier or obstacle is indeed a "no-go" area, it is reinforced by tracking of targets from all directions. In effect, the arrows indicate the directions corresponding to a null histogram bins, and, hence the "no-go" regions. Whilst a single arrow does not define a boundary or "no-go" region, a continuum of such arrows defines "no-go" regions to define an enclosure boundary, that is, the perimeter of the rooms 600 and 700.

In effect, the method of tracking targets within the field of view of the radar sensor to derive a boundary, and thereby a model of an enclosure, can be used for any space of interest irrespective of whether there are physical barriers defining such a space. However, this method can also be used to refine boundary and the model of enclosures as described below.

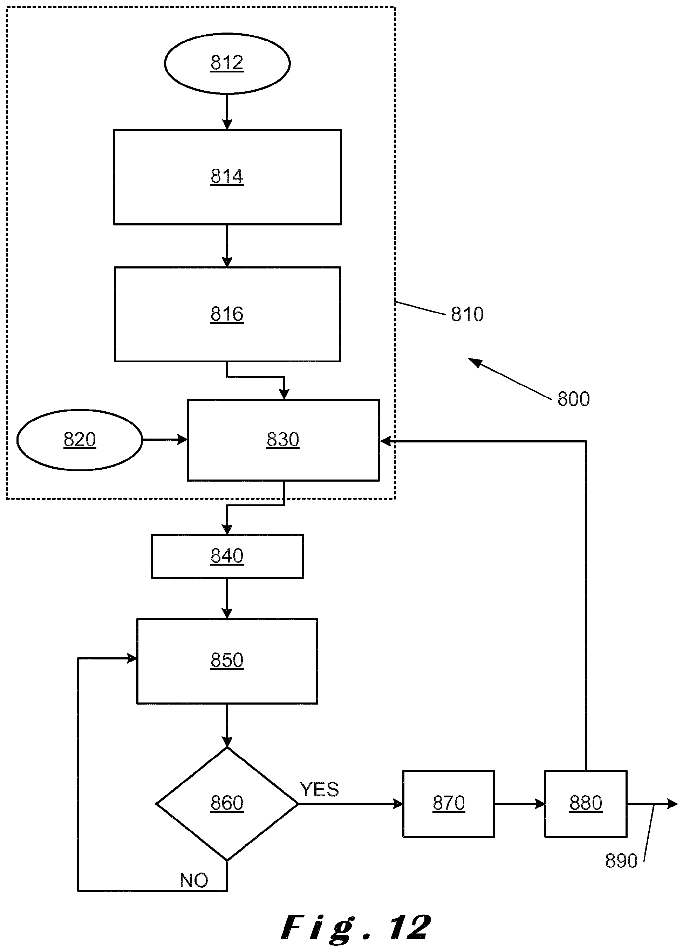

Figure 12 illustrates a flow chart 800 of the steps of the method of tracking targets in a field of view to provide a boundary of a space of interest. The first step, step 810, is to create histograms for each sub-space within the field of view of the radar sensor. In this step, the field of view of the radar sensor is determined based on its location relative to the space of interest to be determined (step 812). The determined field of view is then divided into three-dimensional sub-spaces with respect to resolution (step 814). In step 814, the sub-spaces are defined using range resolution, $\partial R$, angle resolution in azimuth, $\partial \theta$, and, angle resolution in elevation, $\partial \varnothing$. Once the sub-spaces have been determined, a histogram is created for each sub-space in step 816. Each histogram is used to capture direction of movement of targets for each sub-space in the field of view of the radar sensor.

After receiving an initialization input (step 820), that is, the determination of non-moving targets within the space of interest, the histograms are updated based on the initialization input where non-moving targets, such as walls, furniture etc. are determined, if necessary (step 830). The radar sensor scans the field of view for targets (step 840) and then tracks all observable moving targets (step 850).

During tracking, the instantaneous velocity of the moving targets is recorded along with their spatial position within the field of view. For each spatial position, the instantaneous velocity of the moving targets within the field of view of the radar sensor is recorded. Each spatial position corresponds to, or is mapped to, a sub-space of the field of view of the radar sensor. The histograms are continuously populated with direction information for every sub-space of the field of view traversed by the targets. By mapping a spatial location to a sub-space and identifying histograms in the mapped sub-space regions which are empty, the space of interest can be determined, as these empty histograms indicate sub-space regions where there is no movement of one or more tracked moving targets.

In step 850, the histograms are continuously populated with tracking data relating to targets moving within the field of view of the radar sensor. In step 860, it is determined if there is sufficient data collected for use in determining the space boundary. If there is not sufficient data, the method returns to step 850 to gather more data from the tracking of moving targets within the field of view. If there is sufficient data, the next step, step 870, is to extract the histograms having no tracking data which correspond to "no-go" areas or regions. These extracted empty histograms are used to determine and refine the boundaries and to derive a space model, step 880, which is output at 890. The derived space boundary is fed back as an input to step 830 thereby refining the regions in the space of interest in which moving targets should be expected to be detected by updating each histogram.

It will readily be understood that empty histograms contain no velocity data as none of the one or more tracked targets move into the sub-space region associated with such histograms, and, therefore no velocity data is stored therein.

This method of tracking one or more targets within the field of view of the radar sensor may also be used for refining the boundary as well as the space model of a space of interest if the boundary of the space of interest is determined by another method. For example, a boundary of the space of interest, typically a room, can be derived from the presence of an opposite wall as described with reference to Figure 5. The tracking of targets may be used to refine the boundary of the room as described above with reference to Figures 10a, 10b, 11a, 11b and 12. Similarly, a boundary derived using heat mapping can be refined using this tracking method.

Furthermore, a boundary derived by using positional information relating to the one or more objects detectable by the radar sensor and present within and around the boundary of the space of interest can be refined using this tracking method. Such objects can be placed at different locations around the perimeter of the enclosure at locations observable by the radar sensor, and vice versa, such objects may be used to refine boundary derived by the tracking method.

Tracking of moving targets in accordance with the present disclosure can readily adjust for changes in the room layout without requiring a recalibration. Moreover, the model obtained in this way can readily be adjusted for non-moving targets within the enclosure, and, for the relocation of such targets within the enclosure.

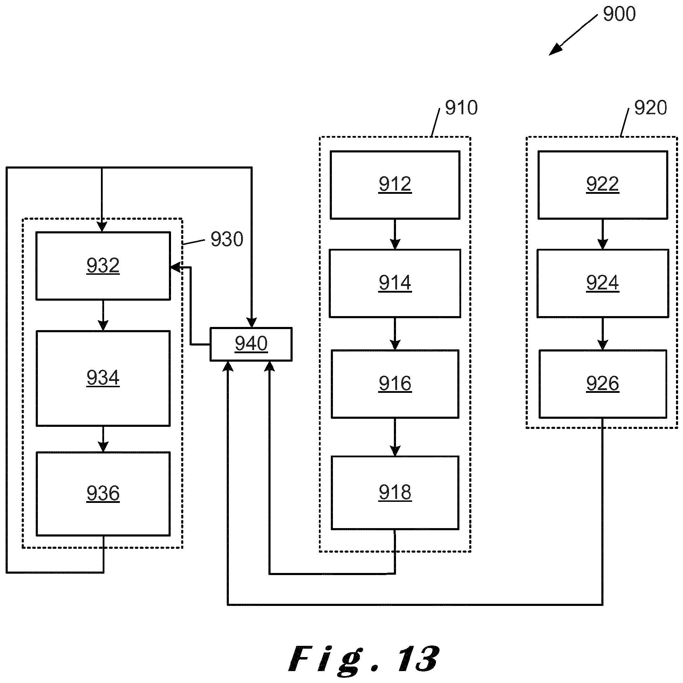

Figure 13 shows a flow chart 900 illustrating different methods for the determination of a boundary to a space of interest in accordance with the present disclosure which can be used alone or in combination. Block 910 corresponds to the derivation of a space model from an opposite wall as described with reference to Figure 5; block 920 corresponds to the derivation of the space model using heat mapping (supervised tracking) as described with reference to Figures 8a to 8c and 9a to 9c; and block 930 corresponds to the derivation of the space model using intent tracking (unsupervised tracking) of moving targets as described with reference to Figures 10a, 10b, 11a, 11b and 12.

Starting with block 910, the first step after installation of the radar sensor in a suitable position within the space of interest, for example, an enclosure such as a room, is to orient the radar sensor so that it has an optimal field of view in at least one plane, azimuth or elevation (step 912). Ideally, both planes will be used as radar sensors will normally scan in both planes, but this is not essential to be able to determine the location of an opposite wall as described with reference to Figure 4. After orientation of the radar sensor, scans are performed in at least one plane to determine a line or plane which is perpendicular to the normal of the radar sensor (step 914). From the reflected radiation, as described with reference to Figure 4, it is possible to infer the presence of an opposite wall (step 916). From the inference of an opposite wall, it is possible to determine a boundary corresponding to the size and shape of the enclosure (step 918) for a given model, for example, a rectangular room.

In block 920, by scanning with the radar sensor in at least one plane, azimuth or elevation, a rough boundary of the enclosure is obtained (step 922). By way of heat mapping as described above with reference to Figures 8a to 8c and 9a to 9c, using one of a random path, a planned path or a perimeter path, an estimate of the perimeter of the enclosure is obtained (step 924). From this estimation, a model corresponding to the enclosure can be created (step 926).

In block 930, by scanning with the radar sensor in at least one plane azimuth or elevation (step 932), data, such as, spatial position and direction of motion relating to moving targets, can be obtained as described with reference to Figure 12 above. This data is processed to provide an estimation of the perimeter of the enclosure (step 934), and then a model of the space of interest (step 936). The model of the space of interest derived here can be used alone (not shown) or to refine the space models derived from at least one of blocks 910, 920 as shown in step 940.

The space boundary derived from inference of the opposite wall (block 910) and the associated space model, as well as the boundary derived from heat mapping (block 920), can be used separately. However, these two models may lack accuracy due to the penetrating properties of the radiation emitted from the radar sensor, and, the use of the tracking of moving targets (block 930) can be used to refine these models.

By combining various techniques described above in accordance with the present disclosure, a good level of robustness against disturbances is obtained.

**Claims**

1. A method of determining a boundary of a space of interest using a radar sensor with beamforming capabilities, the method comprising the steps of:

   a) scanning in at least one plane within the field of view of the radar sensor;
   b) detecting one or more moving targets within the field of view;
   c) tracking the one or more detected moving targets;
   d) deriving information relating to the one or more tracked moving targets;
   e) determining, from the derived information, regions not traversed by the one or more tracked moving targets;
   f) deriving a boundary of the space of interest from the regions not traversed by the one or more tracked moving targets,
   wherein step d) further comprises mapping positional information relating to the one or more tracked moving targets to sub-space regions, and, populating each histogram of a plurality of histograms with velocity information relating to movement of the one or more tracked moving targets for a respective sub-space region, and wherein step e) further comprises identifying one or more histograms for which the velocity information is zero, and, identifying sub-space regions associated with the identified one or more histograms as being regions not traversed by the one or more tracked moving targets.

2. A method according to claim 1, wherein step d) further comprises deriving positional information relating to the one or more tracked moving targets.

3. A method according to claim 1 or 2, wherein step b) further comprises the steps of:

   b1) detecting one or more fixed targets present within the field of view of the radar sensor; and
   b2) determining positional information for the one or more fixed targets;
   and wherein step f) further comprises the step of:
   refining the boundary of the space of interest using the positional information relating to the one or more fixed targets.

4. A method according to any one of claims 1 to 3, wherein step d) further comprises deriving velocity information relating to movement of the one or more tracked moving targets.

5. A method according to any one of claims 1 to 4, wherein step d) further comprises dividing the field of view into sub-space regions in accordance with range resolution, $\partial R$ and angle resolution in azimuth, $\partial \theta$.

6. A method according to claim 5, wherein step d) further comprises dividing the field of view into sub-space regions in accordance with angle resolution in elevation, $\partial \emptyset$.

7. A method according to claim 5 or 6, wherein step d) further comprises assigning a histogram to each sub-space region.

8. A method according to any one of claims 1 to 7, further comprising the steps of:

   g) updating each histogram in accordance with velocity information relating to movement of the one or more tracked targets; and
   h) refining the boundary of the space of interest using the updated histograms.

**9.** A method according to any one of claims 1 to 8 wherein step a) further comprises:

i) performing a plurality of scans of the space of interest in at least one of: the azimuth plane and the elevation plane within the field of view of the radar sensor;

ii) determining a range-angle map after each scan; and

iii) identifying at least three points forming a line in the scan plane, the line being perpendicular to a normal of a view angle of the radar sensor, while ensuring the perpendicular to the normal of the view angle of the radar sensor does not extend directly into the corner, but instead is oblique thereto and wherein the deriving a boundary of the space of interest further is based on the deriving an extent of said boundary, where step f) further comprises:

iv) determining the location of one part of the boundary of the space of interest from the identified points forming the line in the scan plane; and

v) deriving an extent of the boundary in the scan plane based on the line in the scan plane.

**10.** A method according to claim 9, wherein the space of interest is pre-defined, and wherein step iv) comprises locating a first dimension of the pre-defined space of interest, and step v) comprises locating a second dimension of the pre-defined space of interest.

**11.** A method according to claim 10, wherein the pre-defined space of interest comprises a rectangle.

**12.** A method according to any one of claims 1 to 8 wherein step c) further comprises tracking the one or more detected moving targets following a path within the field of view, and step f) further comprises deriving the boundary of the space of interest from the path of the one or more tracked moving targets.

**13.** A method according to claim 12, wherein step c) comprises tracking the one or more moving target in one of: a random path, a planned path and a perimeter path within the space of interest.

**14.** A method according to claim 12 or 13, wherein the path comprises one of: the random path and the planned path, and wherein step f) comprises using a morphological processing operation on the path of the one or more tracked moving targets.

**15.** A method according to claim 12 or 13, wherein the path comprises the perimeter path, and wherein step f) comprises determining the position of the one or more moving targets at any time on the perimeter path.

**Patentansprüche**

**1.** Verfahren zum Bestimmen einer Grenze eines interessierenden Raums unter Verwendung eines Radarsensors mit Strahlformungsfähigkeiten, wobei das Verfahren die folgenden Schritte umfasst:

A) Scannen in mindestens einer Ebene innerhalb des Sichtfeldes des Radarsensors;
b) Detektieren eines oder mehrerer sich bewegender Ziele innerhalb des Sichtfeldes;
c) Verfolgen des einen oder der mehreren detektierten sich bewegenden Ziele;
d) Ableiten von Informationen in Bezug auf das eine oder die mehreren verfolgten sich bewegenden Ziele;
e) Bestimmen von Regionen, die nicht von dem einen oder den mehreren verfolgten sich bewegenden Zielen durchquert werden, aus den abgeleiteten Informationen;
f) Ableiten einer Grenze des interessierenden Raums aus den Regionen, die nicht von dem einen oder den mehreren verfolgten sich bewegenden Zielen durchquert werden,
wobei Schritt d) ferner ein Abbilden von Positionsinformationen bezüglich des einen oder der mehreren verfolgten sich bewegenden Ziele auf Unterraumregionen und ein Befüllen jedes Histogramms mehrerer Histogramme mit Geschwindigkeitsinformationen bezüglich der Bewegung des einen oder der mehreren verfolgten sich bewegenden Ziele für eine jeweilige Unterraumregion umfasst, und
wobei Schritt e) ferner ein Identifizieren eines oder mehrerer Histogramme, für die die Geschwindigkeitsinformationen null sind, und ein Identifizieren von Unterraumregionen, die dem identifizierten einen oder den identifizierten mehreren Histogrammen zugeordnet sind, als Regionen, die nicht von dem einen oder den mehreren verfolgten sich bewegenden Zielen durchquert werden, umfasst.

**2.** Verfahren nach Anspruch 1, wobei Schritt d) ferner ein Ableiten von Positionsinformationen in Bezug auf das eine oder die mehreren verfolgten sich bewegenden Ziele umfasst.

**3.** Verfahren nach Anspruch 1 oder 2, wobei Schritt b) ferner die folgenden Schritte umfasst:

b1) Detektieren eines oder mehrerer fixer Ziele, die innerhalb des Sichtfeldes des Radarsensors vorhanden sind; und
b2) Bestimmen von Positionsinformationen für das eine oder die mehreren fixen Ziele; und wobei Schritt f) ferner den Schritt umfasst: Verfeinern der Grenze des interessierenden Raums unter Verwendung der Positionsinformationen, die sich auf das eine oder die mehreren fixen Ziele beziehen.

4. Verfahren nach einem der Ansprüche 1 bis 3, wobei Schritt d) ferner ein Ableiten von Geschwindigkeitsinformationen in Bezug auf die Bewegung des einen oder der mehreren verfolgten sich bewegenden Ziele umfasst.

5. Verfahren nach einem der Ansprüche 1 bis 4, wobei Schritt d) ferner ein Aufteilen des Sichtfeldes in Unterraumregionen gemäß Entfernungsauflösung, $\partial R$, und Winkelauflösung in Azimut, $\partial\theta$, umfasst.

6. Verfahren nach Anspruch 5, wobei Schritt d) ferner ein Aufteilen des Sichtfeldes in Unterraumregionen gemäß Höhenwinkelauflösung, $\partial\varnothing$, umfasst.

7. Verfahren nach Anspruch 5 oder 6, wobei Schritt d) ferner ein Zuweisen eines Histogramms zu jeder Unterraumregion umfasst.

8. Verfahren nach einem der Ansprüche 1 bis 7, das ferner die folgenden Schritte umfasst:

g) Aktualisieren jedes Histogramms gemäß Geschwindigkeitsinformationen, die sich auf eine Bewegung des einen oder der mehreren verfolgten Ziele beziehen; und
h) Verfeinern der Grenze des interessierenden Raums unter Verwendung der aktualisierten Histogramme.

9. Verfahren nach einem der Ansprüche 1 bis 8, wobei Schritt a) ferner Folgendes umfasst:

i) Durchführen mehrerer Scans des interessierenden Raums in mindestens einer von: der Azimutebene und der Höhenebene innerhalb des Sichtfeldes des Radarsensors;
ii) Bestimmen einer Entfernungs-Winkel-Karte nach jedem Scan; und
iii) Identifizieren von mindestens drei Punkten, die eine Linie in der Scanebene bilden, wobei die Linie senkrecht zu einer Normalen eines Sichtwinkels des Radarsensors ist, während sichergestellt wird, dass sich die Senkrechte zu der Normalen des Sichtwinkels des Radarsensors nicht direkt in die Ecke erstreckt, sondern stattdessen schräg dazu ist und wobei das Ableiten einer Grenze des interessierenden Raums ferner auf dem Ableiten einer Ausdehnung der Grenze basiert, wobei Schritt f) ferner Folgendes umfasst:

iv) Bestimmen des Orts eines Teils der Grenze des interessierenden Raums aus den identifizierten Punkten, die die Linie in der Scanebene bilden; und
v) Ableiten einer Ausdehnung der Grenze in der Scanebene basierend auf der Linie in der Scanebene.

10. Verfahren nach Anspruch 9, wobei der interessierende Raum vordefiniert ist und wobei Schritt iv) ein Lokalisieren einer ersten Abmessung des vordefinierten interessierenden Raums umfasst und Schritt v) ein Lokalisieren einer zweiten Abmessung des vordefinierten interessierenden Raums umfasst.

11. Verfahren nach Anspruch 10, wobei der vordefinierte interessierende Raum ein Rechteck umfasst.

12. Verfahren nach einem der Ansprüche 1 bis 8, wobei Schritt c) ferner ein Verfolgen des einen oder der mehreren detektierten sich bewegenden Ziele, die einem Pfad innerhalb des Sichtfeldes folgen, umfasst und Schritt f) ferner ein Ableiten der Grenze des interessierenden Raums aus dem Pfad des einen oder der mehreren verfolgten sich bewegenden Ziele umfasst.

13. Verfahren nach Anspruch 12, wobei Schritt c) ein Verfolgen des einen oder der mehreren sich bewegenden Ziele auf einem der folgenden Pfade umfasst: einem Zufallspfad, einem geplanten Pfad und einem Umfangspfad innerhalb des interessierenden Raums.

14. Verfahren nach Anspruch 12 oder 13, wobei der Pfad einen der folgenden Pfade umfasst: den Zufallspfad und den geplanten Pfad, und wobei Schritt f) ein Verwenden einer morphologischen Verarbeitungsoperation an dem Pfad des einen oder der mehreren verfolgten sich bewegenden Ziele umfasst.

15. Verfahren nach Anspruch 12 oder 13, wobei der Pfad den Umfangspfad umfasst und wobei Schritt f) ein Bestimmen der Position des einen oder der mehreren sich bewegenden Ziele zu jeder Zeit auf dem Umfangspfad umfasst.

**Revendications**

1. Procédé de détermination d'une limite d'un espace d'intérêt au moyen d'un capteur radar à capacités de formation de faisceaux, le procédé comprenant les étapes suivantes :

a) le balayage dans au moins un plan à l'intérieur du champ de vision du capteur radar ;
b) la détection d'une ou de plusieurs cibles mobiles à l'intérieur du champ de vision ;

c) le suivi de la ou des cibles mobiles détectées ;

d) la dérivation d'informations relatives à la ou aux cibles mobiles suivies ;

e) la détermination, à partir des informations dérivées, de régions non traversées par la ou les cibles mobiles suivies ;

f) la dérivation d'une limite de l'espace d'intérêt à partir des régions non traversées par la ou les cibles mobiles suivies,

dans lequel l'étape d) comprend en outre la mise en correspondance d'informations de position relatives à la ou aux cibles mobiles suivies avec des sous-régions spatiales, et l'alimentation de chaque histogramme d'une pluralité d'histogrammes avec des informations de vitesse relatives au mouvement de la ou des cibles mobiles suivies pour une sous-région spatiale respective, et

dans lequel l'étape e) comprend en outre l'identification d'un ou de plusieurs histogrammes pour lesquels les informations de vitesse sont nulles, et l'identification de sous-régions spatiales associées au ou aux histogrammes identifiés comme étant des régions non traversées par la ou les cibles mobiles suivies.

2. Procédé selon la revendication 1, dans lequel l'étape d) comprend en outre la dérivation d'informations de position relatives à la ou aux cibles mobiles suivies.

3. Procédé selon la revendication 1 ou 2, dans lequel l'étape b) comprend en outre les étapes suivantes :

   b1) la détection d'une ou de plusieurs cibles fixes présentes à l'intérieur du champ de vision du capteur radar ; et

   b2) la détermination d'informations de position pour la ou les cibles fixes ;

   et dans lequel l'étape f) comprend en outre l'étape suivante :

   l'affinage de la limite de l'espace d'intérêt au moyen des informations de position relatives à la ou aux cibles fixes.

4. Procédé selon l'une quelconque des revendications 1 à 3, dans lequel l'étape d) comprend en outre la dérivation d'informations de vitesse relatives au mouvement de la ou des cibles mobiles suivies.

5. Procédé selon l'une quelconque des revendications 1 à 4, dans lequel l'étape d) comprend en outre la division du champ de vision en sous-région spatiales conformément à une résolution en distance, $\partial R$, et à une résolution angulaire en azimut, $\partial \theta$.

6. Procédé selon la revendication 5, dans lequel l'étape d) comprend en outre la division du champ de vision en sous-région spatiales conformément à une résolution angulaire en élévation, $\partial \emptyset$.

7. Procédé selon la revendication 5 ou 6, dans lequel l'étape d) comprend en outre l'affectation d'un histogramme à chaque sous-région spatiale.

8. Procédé selon l'une quelconque des revendications 1 à 7, comprenant en outre les étapes suivantes :

   g) la mise à jour de chaque histogramme conformément à des informations de vitesse relatives au mouvement de la ou des cibles suivies ; et

   h) l'affinage de la limite de l'espace d'intérêt au moyen des histogrammes mis à jour.

9. Procédé selon l'une quelconque des revendications 1 à 8, dans lequel l'étape a) comprend en outre :

   i) la réalisation d'une pluralité de balayages de l'espace d'intérêt dans au moins un plan parmi : le plan d'azimut et le plan d'élévation à l'intérieur du champ de vision du capteur radar ;

   ii) la détermination d'une carte distance-angle après chaque balayage ; et

   iii) l'identification d'au moins trois points formant une ligne dans le plan de balayage, la ligne étant perpendiculaire à une normale d'un angle de vue du capteur radar, tout en veillant à ce que la perpendiculaire à la normale de l'angle de vue du capteur radar ne s'étende pas directement dans le coin, mais lui soit au contraire oblique, et la dérivation d'une limite de l'espace d'intérêt étant en outre basée sur la dérivation d'une étendue de ladite limite, l'étape f) comprenant en outre :

   iv) la détermination de l'emplacement d'une partie de la limite de l'espace d'intérêt à partir des points identifiés formant la ligne dans le plan de balayage; et

   v) la dérivation d'une étendue de la limite dans le plan de balayage sur la base de la ligne dans le plan de balayage.

10. Procédé selon la revendication 9, dans lequel l'espace d'intérêt est prédéfini, et dans lequel l'étape iv) comprend le repérage d'une première dimension de l'espace d'intérêt prédéfini, et l'étape v) comprend le repérage d'une deuxième dimension de l'espace d'intérêt prédéfini.

11. Procédé selon la revendication 10, dans lequel l'espace d'intérêt prédéfini comprend un rectangle.

12. Procédé selon l'une quelconque des revendications 1 à 8, dans lequel l'étape c) comprend en outre le suivi de la ou des cibles mobiles détectées suivant un trajet à l'intérieur du champ de vision, et l'étape f) comprend en outre la dérivation de la limite de l'espace d'intérêt à partir du trajet de la ou des cibles mobiles suivies.

13. Procédé selon la revendication 12, dans lequel l'étape c) comprend le suivi de la ou des cibles mobiles dans un trajet parmi : un trajet aléatoire, un trajet planifié et un trajet de périmètre à l'intérieur de l'espace d'intérêt.

14. Procédé selon la revendication 12 ou 13, dans lequel le trajet comprend un trajet parmi : le trajet aléatoire et le trajet planifié, et dans lequel l'étape f) comprend l'utilisation d'une opération de traitement morphologique sur le trajet de la ou des cibles mobiles suivies.

15. Procédé selon la revendication 12 ou 13, dans lequel le trajet comprend le trajet de périmètre, et dans lequel l'étape f) comprend la détermination de la position de la ou des cibles mobiles à tout instant sur le trajet de périmètre.

**Fig.1**

**Fig.2**

**Fig.3**

**Fig.4**

**Fig.5**

**Fig.6**

**Fig. 7a**

**Fig. 7b**

**Fig. 8a**

**Fig. 8b**

**Fig. 8c**

**Fig. 9a**

**Fig. 9b**

**Fig. 9c**

EP 3 525 002 B1

*F i g . 10a*

*F i g . 10b*

*Fig. 11a*

*Fig. 11b*

*Fig. 12*

*Fig. 13*

**EP 3 525 002 B1**

**Patent documents cited in the description**

- WO 0101168 A
- US 7250853 B